# EUROPEAN PATENT APPLICATION

(11) **EP 4 782 373 A1**
(43) Date of publication of application: **29.07.2026**
(21) Application number: 24867897.1
(22) Date of filing: 22.07.2024
(51) Int. Cl.: B65G 47/248

(54) **CONTAINER ORIENTATION REVERSING DEVICE**

(30) Priority: 21.09.2023 JP 2023156488
(71) Applicant: Hitachi Industry & Control Solutions, Ltd., Taito-ku, Tokyo 110-0006 (JP)
(72) Inventor: MATSUDA, Yutaka, Tokyo 110-0006 (JP); TOMOBE, Kosuke, Tokyo 110-0006 (JP); KATANE, Tadahiro, Tokyo 110-0006 (JP); MIMURA, Michio, Tokyo 110-0006 (JP)
(74) Representative: MERH-IP Matias Erny Reichl Hoffmann Patentanwälte PartG mbB
(86) International application number: PCT/JP2024/026203
(87) International publication number: WO 2025/062815

(57) **Abstract**

A container orientation reversing device (11) configured to reverse an orientation of a container (21) from an inverted state (22a) to a stand-up state (22b) during conveyance of the container (21), comprising: a wheel member (33) provided configured to rotate around a main shaft (31) extending in a vertical direction; a plurality of reversing brackets (37) provided on an outer circumferential edge (33a) of the wheel member (33), the reversing brackets (37) each including a holder (35) for container (21); and a reversing action member (39) configured to cause an orientation reversing operation of reversing the orientation of the container (21), which is held by the holder (35) of each of the reversing brackets (37), wherein the reversing brackets (37) are each supported by the outer circumferential edge (33a) so as to pivotably turn the orientation of the container (21) from the inverted state to the stand-up state in a radial direction of the main shaft (31), the reversing action member (39) reverses the orientation of the container (21) in the inverted state to the stand-up state.

## Description

### TECHNICAL FIELD

The present invention relates to a container orientation reversing device for reversing an orientation of a container.

### BACKGROUND ART

Syringe-type liquid medicine containers (hereinafter sometimes referred to as syringe containers) used in medical settings and the like, may require a step of reversing the orientation of a syringe container in a vertical direction while a liquid medicine is sealed inside, in a manufacturing step, a shipping inspection, or the like.

For example, in a certain inspection on a syringe container in a stand-up state with a flange portion, called a backstop, of the syringe container positioned on the lower side, if the syringe container is conveyed in an inverted state with the flange portion of the syringe container positioned on the upper side in the step immediately prior to the inspection step, it is necessary to reverse the orientation of the syringe container in the vertical direction.

As an example of the conventional container orientation reversing device, Patent Literature 1 discloses a technique for operating containers being conveyed by a rotating coupling wheel, the technique including moving the coupling wheel around a rotation axis extending substantially vertically, while pivoting a holding element around a rotation axis extending substantially horizontally and cyclically pivoting the holding element reciprocally by 180°.

Patent Literature 2 discloses a technique in which a box with its inlet/outlet held open is turned upside down by a box-ejection operation section on a conveyor line, and the laterally-long orientation of an article ejected from the box is changed to a laterally-long orientation (stand-up state) by an orientation change section.

. Patent Literature 3 discloses a technique in which a combination of two truncated cone-shaped jigs each having a plurality of holders capable of holding containers on its circumferential edge reverses a container by 180°.

### CITATION LIST

### Patent Literature

Patent Literature 1: JP2005-526675A
Patent Literature 2: JP2010-064765A
Patent Literature 3: JP2004-018176A

### SUMMARY OF INVENTION

### Technical Problem

However, in the technique disclosed in Patent Literature 1, when the orientation reversing structure performs orientation change, the orientation reversing path of one container overlaps with the orientation reversing path of another container. This makes it difficult to increase the number of containers per wheel. Furthermore, because the orientation reversing operation includes an operation of chucking containers, it is difficult to increase the conveyance speed.

The technique disclosed in Patent Literature 2 is based on the premise that the containers are conveyed on a belt-conveyor, and therefore has a problem in that it is difficult to handle syringe containers each having a long, narrow cylindrical shape prone to falling down, and having a form with one side pointed.

Moreover, in the techniques disclosed in Patent Literatures 2 and 3, the angle of one orientation change is approximately 90°, and a combination of two mechanisms is required to reverse the direction of a container by 180°. As a result, the device inevitably has a large size particularly in the conveyance direction, which is a problem in that the size of the entire device is large.

The present invention has been made in view of the above-mentioned circumstances, and an object of the present invention is to provide a container orientation reversing device capable of quickly reversing the orientations of a plurality of containers in a space-saving manner.

### Solution to Problem

A container orientation reversing device according to the present invention is a container orientation reversing device configured to reverse an orientation of a cylindrical syringe container having a flange portion at its one end from an inverted state to a stand-up state during conveyance of the syringe container, the container orientation reversing device including: a disk-shaped wheel member provided so as to be rotatable around a main shaft extending in a vertical direction; a plurality of reversing brackets provided on an outer circumferential edge of the wheel member, the reversing brackets each including a holder configured to hold the syringe container; and a reversing action member configured to cause an orientation reversing operation of reversing the orientation of the syringe container, which is held in the inverted state by the holder of each of the reversing brackets, to the stand-up state. The container orientation reversing device has the following features: the reversing brackets are each supported by the outer circumferential edge so as to be able to turn the orientation of the syringe container from the inverted state to the stand-up state in a radial direction of the main shaft; the holder of each of the reversing brackets includes a semi-cylindrical accommodating groove configured to accommodate the syringe container, and an engaging portion configured to engage with the flange portion of the syringe container; the accommodating groove provided in the holder of the reversing bracket faces on an outer side in the radial direction of the main shaft when the reversing bracket is in an inverted state, and faces on an inner side in the radial direction of the main shaft when the reversing bracket is in a stand-up state; the reversing action member has a vertical wall following an arc-shaped trajectory when viewed from an axial direction of the main shaft, the vertical wall disposed outside the outer circumferential edge of the wheel member, a top edge of the vertical wall provided with a guide surface undulating in a mountain shape when viewed from the main shaft; according to rotation of the wheel member, a back surface of the holder of the reversing bracket slides up along the guide surface, thereby transitioning the orientation of the reversing bracket from the inverted state to the stand-up state, thereby reversing the orientation of the syringe container from the inverted state to the stand-up state; the reversing action member is provided with the vertical wall at an outer circumferential edge of an elliptical flat plate; and a center of the flat plate is eccentric with respect to the main shaft of the wheel member.

### Advantageous Effects of Invention

According to a container orientation reversing device of the present invention, orientations of a plurality of containers can be reversed quickly in a space-saving manner.

Problems, structures, and effects other than those described above will be described in detail in the following embodiments.

### BRIEF DESCRIPTION OF DRAWINGS

[Fig. 1A] A perspective view showing a schematic structure of a container inspection apparatus including a container orientation reversing device according to an embodiment of the present invention.
[Fig. 1B] A top view showing the schematic structure of the container inspection apparatus shown in Fig. 1A.
[Fig. 2] A perspective view showing the schematic structure of the container orientation reversing device according to the embodiment of the present invention.
[Fig. 3A] A perspective view showing the schematic structure of and around a first reversing bracket provided in the container orientation reversing device shown in Fig. 2.
[Fig. 3B] A perspective view showing a state where a syringe container is held by the first reversing bracket shown in Fig. 3A.
[Fig. 3C] A perspective view showing a state where a syringe container is held by the first reversing bracket shown in Fig. 3A.
[Fig. 4] A perspective view showing a schematic structure of a reversing action member provided in the container orientation reversing device according to the embodiment of the present invention.
[Fig. 5] A perspective view for use to explain an operation of the container orientation reversing device according to the embodiment of the present invention.
[Fig. 6A] A top view of the container orientation reversing device according to the embodiment of the present invention.
[Fig. 6B] A cross-sectional arrow view of the container orientation reversing device taken along line VIB-VIB shown in Fig. 6A.
[Fig. 7A] A bottom view of the container orientation reversing device according to the embodiment of the present invention.
[Fig. 7B] A cross-sectional arrow view of the container orientation reversing device taken along line VIIB-VIIB shown in Fig. 7A.
[Fig. 8A] A perspective view showing a schematic structure of a second reversing bracket provided in a container orientation reversing device.
[Fig. 8B] A perspective view showing the schematic structure of the second reversing bracket pivotably supported by a second stay provided in the container orientation reversing device.
[Fig. 9A]A side view of the second reversing bracket pivotably supported by the second stay provided in the container orientation reversing device.
[Fig. 9B] A side view of the second reversing bracket pivotably supported by the second stay provided in the container orientation reversing device.
[Fig. 9C] A side view of the second reversing bracket pivotably supported by the second stay provided in the container orientation reversing device.
[Fig. 9D] A side view of the second reversing bracket pivotably supported by the second stay provided in the container orientation reversing device.

### DESCRIPTION OF EMBODIMENTS

Container orientation reversing devices according to embodiments of the present invention will be described in detail with reference to the drawings.

In the description of the container orientation reversing devices according to the embodiments of the present invention, components having a common function are given a common reference sign, and redundant description thereof will be omitted.

### [Schematic Structure of Container Inspection Apparatus 10 Including Container Orientation Reversing device 11]

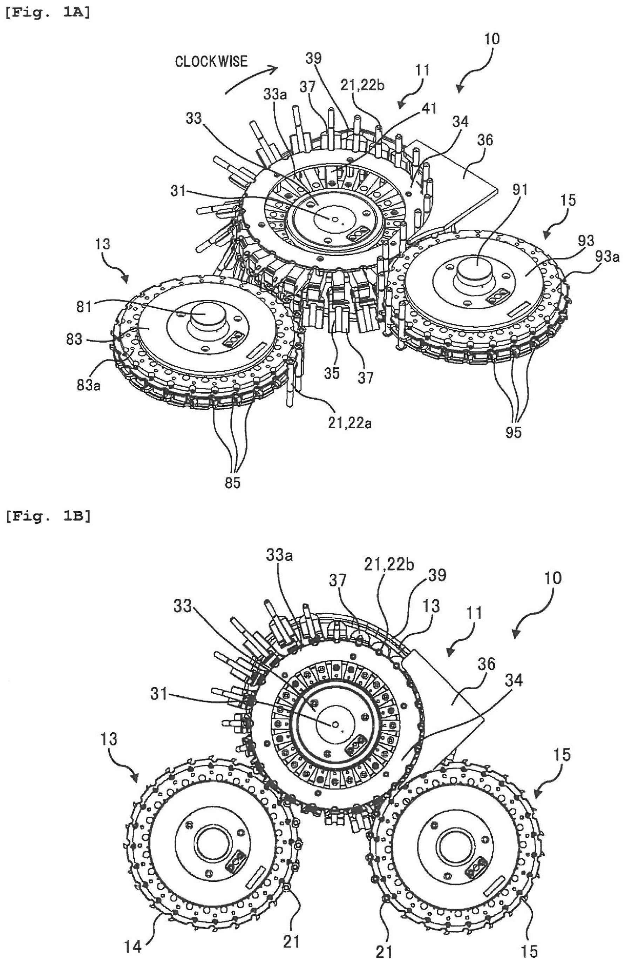

First, a schematic structure of a container inspection apparatus 10 including a container orientation reversing device 11 according to an embodiment of the present invention will be described with reference to Figs. 1A and 1B.

Fig. 1A is a perspective view showing a schematic structure of the container inspection apparatus 10 including the container orientation reversing device 11. Fig. 1B is a top view showing the schematic structure of the container inspection apparatus 10 shown in Fig. 1A.

As shown in Figs. 1A and 1B, the container inspection apparatus 10 includes the container orientation reversing device 11 configured to reverse the orientation, specifically, the top-side position and the bottom-side position, of each syringe container (corresponding to a "container" in the present invention) 21 containing a liquid medicine or the like therein, a container supplying device 13 configured to supply the syringe containers 21 in an inverted state to the container orientation reversing device 11, and a container receiving device 15 configured to receive the syringe containers 21 in a stand-up state, which are reversed by the container orientation reversing device 11.

The container inspection apparatus 10 inspects each syringe container 21 in the stand-up state after being reversed by the container orientation reversing device 11, such as checking whether the amount of liquid medicine contained therein meets a predetermined standard, whether any foreign matter is mixed into the liquid medicine, and whether there is any defect on the exterior such as a scratch or crack.

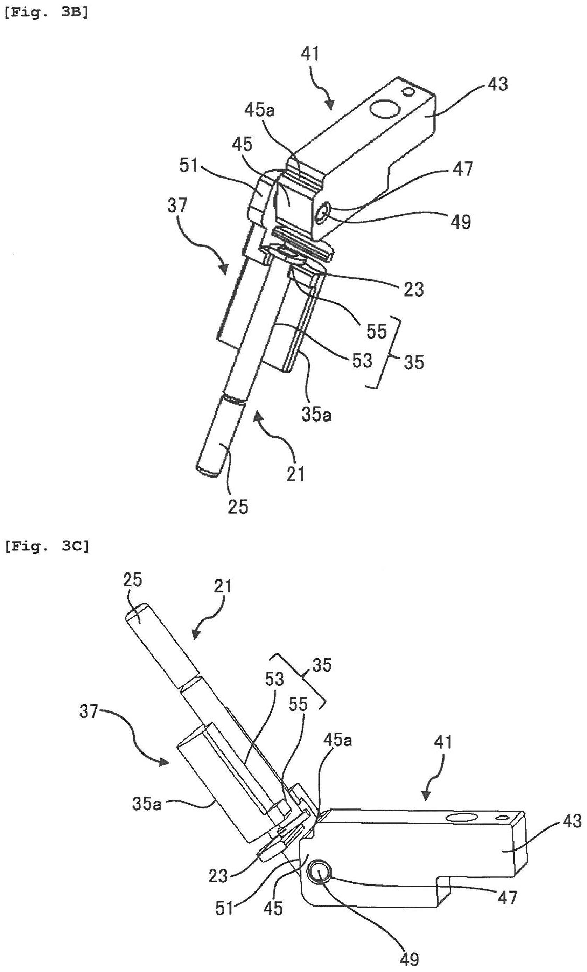

The syringe container 21 is a cylindrical container having a flange portion 23 (see Fig. 3B) called a backstop at one end and a pointed tip portion 25 at the other end. However, in the example shown in Figs. 3B and 3C, the pointed tip portion 25 is capped with a cylindrical cover. In the description of the container orientation reversing device 11 according to the embodiment of the present invention, a state where the flange portion 23 of the syringe container 21 is positioned on the upper side will be referred to as an inverted state 22a, whereas a state where the flange portion 23 is positioned on the lower side will be referred to as a stand-up state 22b as shown in Fig. 1A.

As shown in Figs. 1A and 1B, the container orientation reversing device 11 has a function of reversing the orientation of the syringe container 21 from the inverted state 22a to the stand-up state 22b while the syringe container 21 is being conveyed.

The structure of the container orientation reversing device 11 will be described in detail later.

The container supplying device 13 includes a disk-shaped first conveyor member 83 provided so as to be rotatable around a first rotation shaft 81 extending in a vertical direction, and a plurality of first holders 85 provided at predetermined intervals in an outer circumferential edge 83a of the first conveyor member 83 and configured to hold the syringe containers 21.

The container receiving device 15 includes a disk-shaped second conveyor member 93 provided so as to be rotatable around a second rotation shaft 91 extending in a vertical direction, and a plurality of second holders 95 provided at predetermined intervals in an outer circumferential edge 93a of the second conveyor member 93 and configured to hold the syringe containers 21.

### [Schematic Structure of Container Orientation Reversing device 11]

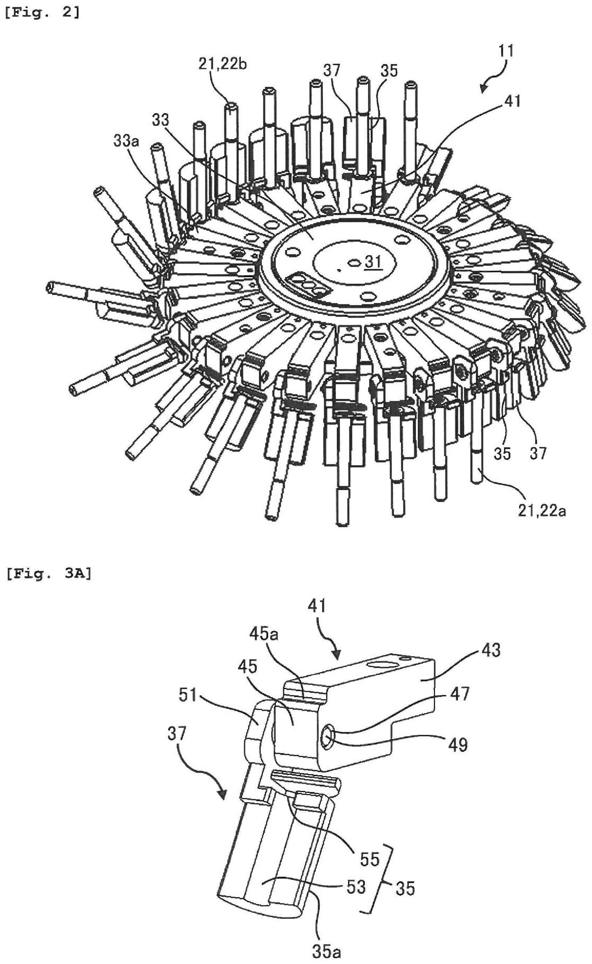

Next, the schematic structure of the container orientation reversing device 11 will be described with reference to Figs. 2, 3A to 3C, 4, and 5 as needed.

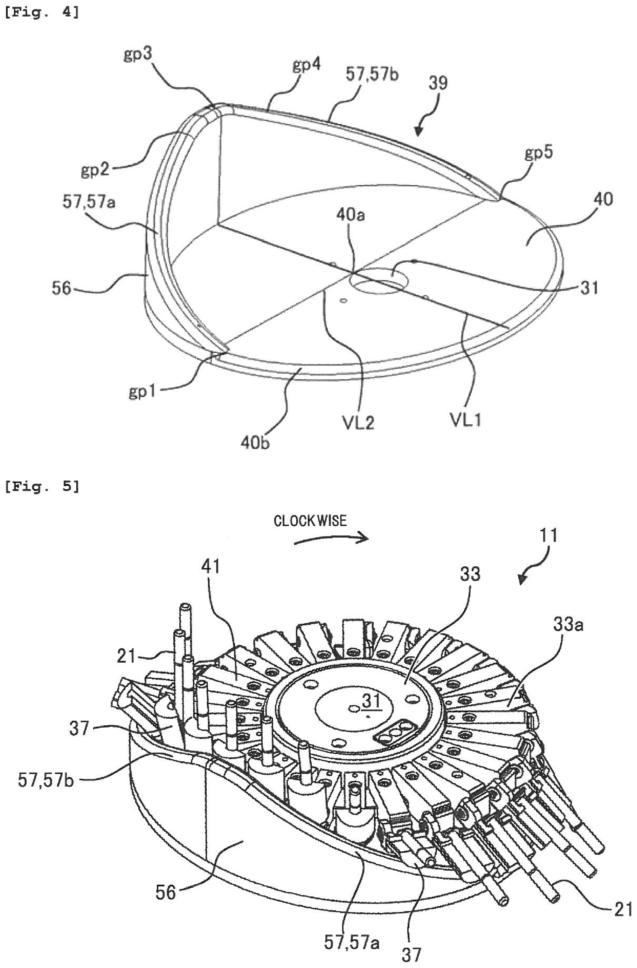

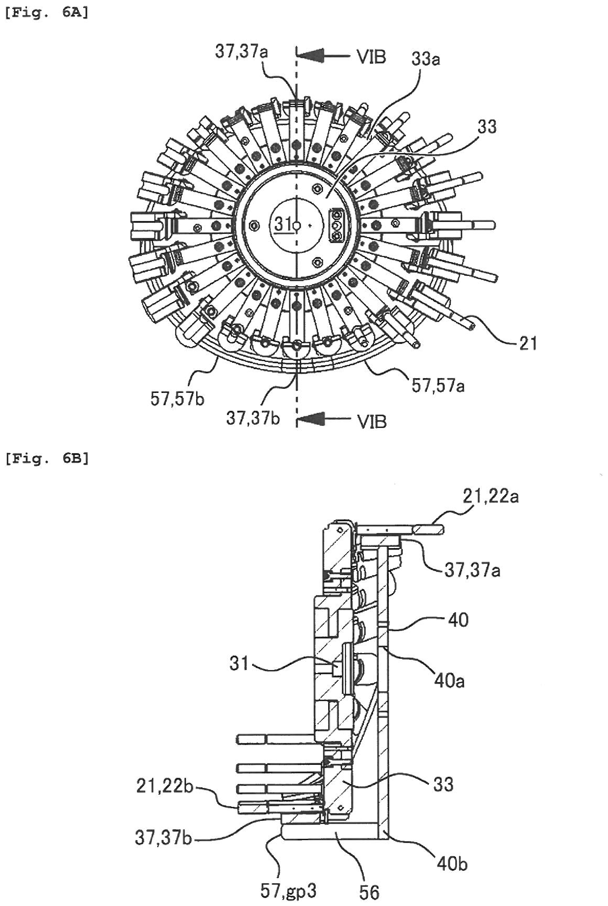

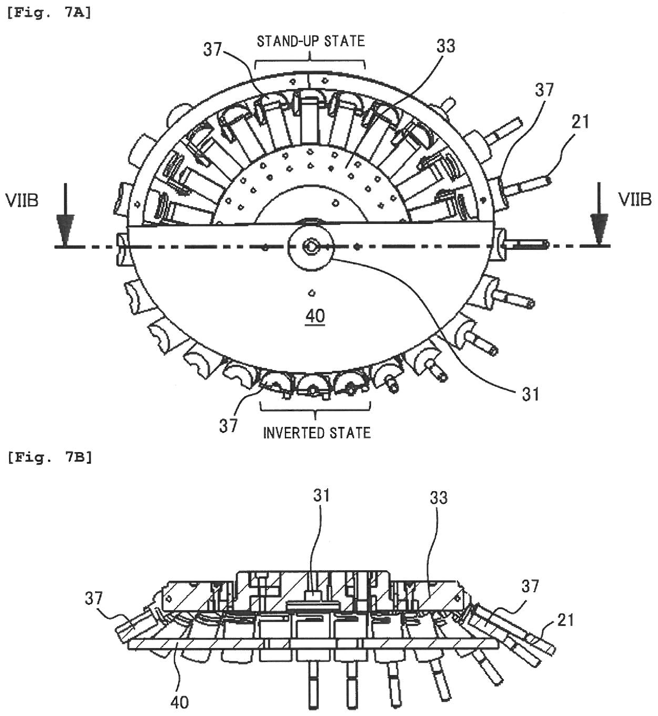

Fig. 2 is a perspective view showing the schematic structure of the container orientation reversing device 11. Fig. 3A is a perspective view showing a schematic structure of and around a first reversing bracket 37 and provided in the container orientation reversing device 11 shown in Fig. 2. Figs. 3B and 3C are perspective views showing a state where the syringe container 21 is held by the first reversing bracket 37 shown in Fig. 3A. Fig. 4 is a perspective view showing a schematic structure of a reversing action member 39 provided in the container orientation reversing device 11. Fig. 5 is a perspective view for use to explain an operation of the container orientation reversing device 11. Fig. 6A is a top view of the container orientation reversing device 11. Fig. 6B is a cross-sectional arrow view of the container orientation reversing device 11 taken along line VIB-VIB shown in Fig. 6A. Fig. 7A is a bottom view of the container orientation reversing device 11. In Fig. 7A, an elliptical flat plate 40 is partially cut away to facilitate observation of movements of the first reversing brackets 37. Fig. 7B is a cross-sectional arrow view of the container orientation reversing device 11 taken along line VIIB-VIIB shown in Fig. 7A.

As shown in Figs. 1A and 2, the container orientation reversing device 11 includes: a disk-shaped wheel member 33 that is provided so as to be rotatable around a main shaft 31 extending in the vertical direction; a plurality of first reversing brackets 37 (see Fig. 3B) according to a first embodiment that are provided at predetermined intervals in a circumferential direction on an outer circumferential edge 33a of the wheel member 33 and that have holders 35 configured to the hold syringe containers 21; and the reversing action member 39 configured to cause an orientation reversing operation on the syringe containers 21 (see Figs. 1A and 2) held in the inverted state 22a by the holders 35 of the first reversing brackets 37.

The main shaft 31 of the wheel member 33 is connected to a rotation drive mechanism including a motor, a reducer, and so on (all not shown). The wheel member 33 and the rotation drive mechanism constitute a conveyor mechanism.

As shown in Figs. 1A and 2, a circumferentially-ringshaped container stay 34 is provided on the outer circumferential edge 33a of the wheel member 33. A plurality of recesses 34b capable of accommodating syringe containers 21 are provided at predetermined intervals in the circumferential direction in an outer circumferential edge 34a of the container stay 34. In addition, a container guide 36 (see Figs. 1A and 1B) facing the outer circumferential edge 34a is provided at a position that is outside the outer circumferential edge 34a of the container stay 34 and is adjacent to the reversing action member 39 in the circumferential direction.

As the wheel member 33 rotates, the container guide 36 has a function of conveying the syringe containers 21 in the stand-up state 22b by clamping the syringe containers 21 in the stand-up state 22b between the recesses 34a of the container stay 34 and the container guide 36 (see Figs. 1A and 1B).

As shown in Figs. 1A and 2, a plurality of first stays 41 according to the first embodiment are attached to the outer circumferential edge 33a of the wheel member 33 at predetermined intervals in the circumferential direction of the main shaft 31.

### [Schematic Structure of First Reversing bracket 37 and First Stay 41 According to First Embodiment]

Next, the schematic structure of the first reversing bracket 37 and the first stay 41 according to the first embodiment will be described with reference to the appropriate drawings.

As shown in Fig. 3A, each first stay 41 includes a first proximal end 43 located on an inner side in a radial direction of the main shaft 31 and attached to the outer circumferential edge 33a of the wheel member 33, and a first tip end 45 located on an outer side in the radial direction of the main shaft 31.

A recessed step 45a is formed at an upper portion of the first tip end 45 of the first stay 41 on the outer side in the radial direction of the main shaft 31. A shaft hole 47 is formed in the first tip end 45 of the first stay 41 so as to extend along a tangential direction to the circumference of the main shaft 31. With a first pin 49 inserted through this shaft hole 47, the first reversing bracket 37 is supported by the first tip end 45 of the first stay 41 so that the orientation of the first reversing bracket 37 can be pivoted between the inverted state 22a and the stand-up state 22b in the radial direction of the main shaft 31.

As shown in Figs. 3B and 3C, the first reversing bracket 37 includes a first cantilever arm 51 pivotally supported by the first tip end 45 of the first stay 41 via the first pin 49, and a holder 35. The holder 35 of the first reversing bracket 37 includes a semi-cylindrical accommodating groove 53 that accommodates the syringe container 21, and a recess-shaped engaging portion 55 with which the flange portion 23 of the syringe container 21 is to be engaged.

The accommodating groove 53 provided in the holder 35 of the first reversing bracket 37 is configured to face on the outer side in the radial direction of the main shaft 31 when the first reversing bracket 37 is in the inverted state (see reference sign 37a in Fig. 2), and to face on the inner side in the radial direction of the main shaft 31 when the first reversing bracket 37 is in the stand-up state (see reference sign 37b in Fig. 2).

The recess-shaped engaging portion 55 provided in the holder 35 of the first reversing bracket 37 has a function of catching the flange portion 23 of the syringe container 21 and preventing it from falling off when the first reversing bracket 37 is in the inverted state 37a (see Fig. 2) and while the first reversing bracket 37 is transitioning from the inverted state 37a to the stand-up state 37b (see Figs. 3B and 3C).

A back surface 35a (see Fig. 3A), opposite to the accommodating groove 53, of the holder 35 of the first reversing bracket 37 is formed in a semi-cylindrical shape. According to the rotation of the wheel member 33, the semi-cylindrical back surface 35a slides up while abutting against a guide surface 57 (see Fig. 5) of the reversing action member 39. This causes the orientation of the first reversing bracket 37 in the inverted state 37a to be reversed to the stand-up state 37b. This operation will be described in detail later.

The first reversing bracket 37 is configured to, after turning into the stand-up state 37b with the action of the reversing action member 39, to be returned from the stand-up state 37b to the inverted state 37a (see Fig. 2) again while leaving the syringe container 21 held in the stand-up state 22b (see Fig. 2). This action is achieved by catching the syringe container 21 in the stand-up state 22b between the recess 34a of the container stay 34 and the container guide 36 (see Figs. 1A and 1B) as the wheel member 33 rotates.

As shown in Figs. 1A, 1B, 4, 5, 7A, and 7B, the reversing action member 39 is structured such that a vertical wall 56 following a substantially arc-shaped trajectory when viewed from an axial direction of the main shaft 31 is provided to a portion of an outer circumferential edge 40b of the elliptical flat plate 40 (see Figs. 4 and 7A). The reversing action member 39 is disposed such that the vertical wall 56 is located outside the outer circumferential edge 33a of the wheel member 33. As shown in Fig. 4, a center 40a of the flat plate 40 is eccentric with respect to the main shaft 31 of the wheel member 33.

As shown in Fig. 4, the flat plate 40 provided in the reversing action member 39 is formed such that a first virtual line VL1 connecting points at which each first reversing bracket 37 turns into the inverted state 37a and turns into the stand-up state 37b is a shorter axis, while a second virtual line VL2 orthogonal to the first virtual line VL1 is a longer axis.

Since the flat plate 40 of the reversing action member 39 is formed in the elliptical shape, the reversing action member 39, having a relatively simple structure, enables the first reversing bracket 37 to perform smooth operations in transitioning between the inverted state 37a and the stand-up state 37b. As a result, the container orientation reversing device 11 can perform quickly and accurately the container conveying and orientation reversing operations.

As shown in Figs. 4 and 5, a guide surface 57 is formed on a top edge of the vertical wall 56 provided in the reversing action member 39, the guide surface 57 undulating in a mountain shape when viewed from the main shaft 31. The guide surface 57 of the vertical wall 56 has a stand-up guide surface 57a that extends continuously from a stand-up start point gp1 via a stand-up end point gp2 to an apex gp3 so that the height dimension of the vertical wall 56 gradually increases, and an inversion guide surface 57b that extends continuously from the apex gp3 via an inversion start point gp4 to an inversion end point gp5 so that the height dimension of the vertical wall 56 gradually decreases.

The operations of the reversing action member 39 provided in the container orientation reversing device 11 will be explained dividedly into a stand-up transition stage in which the first reversing bracket 37 transitions from the inverted state 37a to the stand-up state 37b (see Fig. 2), a stable stand-up stage in which the first reversing bracket 37 stably maintains the stand-up state 37b, and an inversion transition stage in which the first reversing bracket 37 transitions from the stand-up state 37b to the inverted state 37a.

As shown in Figs. 5, 6A, 6B, 7A, and 7B, at the stand-up transition stage, while the wheel member 33 is rotating, for example, clockwise (see Fig. 5), the back surface 35a of the holder 35 provided in the first reversing bracket 37 abuts against a stand-up transition region of the guide surface 57 of the vertical wall 56, which extends from the stand-up start point gp1 to the stand-up end point gp2.

In this stand-up transition region, the first reversing bracket 37 gradually transitions its orientation from the inverted state 37a to the stand-up state 37b in accordance with an increase in the rotation angle of the wheel member 33. Here, the syringe container 21 is held by the holder 35 provided in the first reversing bracket 37.

Therefore, at the stand-up transition stage (a section where the back surface 35a of the holder 35 abuts against the stand-up transition region in the guide surface 57 of the vertical wall 56), the orientation of the syringe container 21, which is at first in the inverted state 22a (see Figs. 1A and 2), can be transitioned to the stand-up state 22b (see Figs. 1A and 2), as is the case with the orientation of the first reversing bracket 37.

At the stable stand-up stage, while the wheel member 33 is rotating clockwise, the back surface 35a of the holder 35 provided in the first reversing bracket 37 abuts against a stable stand-up region of the guide surface 57 of the vertical wall 56, which extends from the stand-up end point gp2 through the apex gp3 to the inversion start point gp4.

In this stable stand-up region, the first reversing bracket 37 maintains its orientation in the stand-up state 37b regardless of an increase in the rotation angle of the wheel member 33. In the example shown in Figs. 5 and 6A, three first reversing brackets 37 maintain their orientations in the stand-up state 37b at the stable stand-up stage. Note that, in the first reversing bracket 37 in the stand-up state 37b, the back surface 35a of the holder 35 abuts against an inner surface 55a of the vertical wall 56, as shown in Fig. 6B.

Here, the syringe container 21 is held by the holder 35 provided in the first reversing bracket 37.

Therefore, at the stable stand-up stage (a section where the back surface 35a of the holder 35 abuts against the stable stand-up region in the guide surface 57 of the vertical wall 56), the orientation of the syringe container 21 can be maintained in the stand-up state 22b (see Figs. 1A, 2, and 6B), as is the case with the orientation of the first reversing bracket 37.

Meanwhile, at the inversion transition stage, while the wheel member 33 is rotating clockwise, the back surface 35a of the holder 35 provided in the first reversing bracket 37 abuts against an inversion transition region in the guide surface 57 of the vertical wall 56, which extends from the inversion start point gp4 to the inversion end point gp5.

In this inversion transition region, the first reversing bracket 37 gradually transitions its orientation from the stand-up state 37b to the inverted state 37a in accordance with an increase in the rotation angle of the wheel member 33. In the first reversing bracket 37 in the inverted state 37a, the back surface 35a of the holder 35 abuts against the outer circumferential edge 40b of the flat plate 40, as shown in Fig. 6B.

Here, the syringe container 21, which is held by the holder 35 provided in the first reversing bracket 37, is released from the holding by the first reversing bracket 37, and the syringe container 21 in the stand-up state 22b is caught between the recess 34a of the container stay 34 and the container guide 36 (see Figs. 1A and 1B) as the wheel member 33 rotates.

Therefore, at the inversion transition stage (a section where the back surface 35a of the holder 35 abuts against the inversion transition region in the guide surface 57 of the vertical wall 56), the orientation of the syringe container 21 in the stand-up state 22b (see Figs. 1A, 2, and 6B) can be maintained as is, unlike the orientation of the first reversing bracket 37.

### [Operations of Container Inspection Apparatus 10 Including Container Orientation Reversing device 11]

Next, operations of the container inspection apparatus 10 will be described.

As a premise, it is assumed that the first holders 85 provided in the first conveyor member 83 of the container supplying device 13 already hold a plurality of syringe containers 21 in the inverted state 22a, as shown in Figs. 1A and 1B.

As shown in Figs. 1A and 1B, the first conveyor member 83 of the container supplying device 13 is assumed to now rotate counterclockwise. Then, the syringe containers 21 in the inverted state 22a conveyed by the first conveyor member 83 of the container supplying device 13 are sequentially supplied to the wheel member 33 of the container orientation reversing device 11. At this time, the wheel member 33 in the container orientation reversing device 11 rotates clockwise in synchronization with the rotational speed of the first conveyor member 83 of the container supplying device 13.

The syringe containers 21 in the inverted state 22a supplied to the wheel member 33 provided in the container orientation reversing device 11 are conveyed while being held by the holders 35 of the first reversing brackets 37 provided on the wheel member 33 via the first stays 41.

If the wheel member 33 provided in the container orientation reversing device 11 rotates clockwise, the back surface 35a of each of the holders 35, which are provided in the first reversing brackets 37 and which hold the syringe containers 21 in the inverted state 22a, comes to abut against the stand-up guide surface 57a in the guide surface 57 of the vertical wall 56 provided in the reversing action member 39. As a result, the first reversing bracket 37 reverses its orientation from the inverted state 37a to the stand-up state 37b in accordance with an increase in the rotation angle of the wheel member 33. Here, the syringe container 21 is held by the holder 35 provided in the first reversing bracket 37. Therefore, as the orientation of the first reversing bracket 37 is reversed, the orientation of the syringe container 21 is also reversed to the stand-up state 22b.

The syringe containers 21 in the stand-up state 22b, which are held by the holders 35 of the first reversing brackets 37, are released from the holding by the first reversing brackets 37 and are conveyed while being caught between the recesses 34a of the container stay 34 and the container guide 36 (see Figs. 1A and 1B) according to the rotation of the wheel member 33.

The syringe containers 21 in the stand-up state 22b, after being reversed by the container orientation reversing device 11, are transferred to the second conveyor member 93 of the container receiving device 15 being rotating counterclockwise. The container receiving device 15 inspects each of the syringe containers 21 in the stand-up state 22b such as checking whether the amount of liquid medicine contained therein meets a predetermined standard, whether any foreign matter is mixed into the liquid medicine, and whether there is any defect on the exterior such as a scratch or crack.

The container orientation reversing device 11 according to the embodiment of the present invention performs the conveying and orientation reversing operations on a plurality of syringe containers 21 continuously in cooperation with the container supplying device 13 and the container receiving device 15 provided at the preceding and subsequent stages, respectively, which makes it possible to quickly and accurately perform the conveying and orientation reversing operations on the a plurality of syringe containers 21 in a space-saving manner.

In addition, since the first reversing brackets 37 are supported on the outer circumferential edge 33a of the wheel member 33 so that each first reversing bracket 37 can turn the orientation of the syringe container 21 from the inverted state 22a to the stand-up state 22b in the radial direction of the main shaft 31, it is possible to prevent a plurality of first reversing brackets 37 from interfering with each other during conveyance and orientation reversing of the syringe containers 21.

Moreover, in the container orientation reversing device 11 according to the embodiment of the present invention, the container is, for example, a cylindrical syringe container 21 having the flange portion 23 at one end and the holder 35 provided in the first reversing bracket 37 for holding the syringe container 21 includes the semi-cylindrical accommodating groove 53 for accommodating the syringe container 21 and the engaging portion 55 with which the flange portion 23 of the syringe container 21 is to be engaged. Therefore, even if an external disturbance such as vibration occurs in the container orientation reversing device 11 during the conveyance and orientation reversing of the syringe container 21, the syringe container 21 can be prevented from falling off the holder 35 of the first reversing bracket 37.

In addition, the syringe container 21 can be prevented from being damaged during the conveying and orientation reversing operations of the syringe container 21.

Furthermore, employing the structure in which the accommodating groove 53 provided in the holder 35 of the first reversing bracket 37 faces on the outer side in the radial direction of the main shaft 31 when the first reversing bracket 37 is in the inverted state 37a and faces on the inner side in the radial direction of the main shaft 31 when the first reversing bracket 37 is in the stand-up state 37b, the container orientation reversing device 11 according to the embodiment of the present invention can realize a device structure that is suitable for continuously performing the conveying and orientation reversing operations on a plurality of syringe containers 21 in cooperation with the container supplying device 13 and the container receiving device 15 provided at the preceding and subsequent stages, respectively.

In the container orientation reversing device 11 according to the embodiment of the present invention, the reversing action member 39 has the vertical wall 56following the arc-shaped trajectory when viewed from the axial direction of the main shaft 31, the vertical wall 56 is arranged outside the outer circumferential edge 33a of the wheel member 33, and the guide surface 57 undulating in the mountain shape when viewed from the main shaft 31 is formed on the top edge of the vertical wall 56. As the wheel member 33 rotates, the back surface 35a of the holder 35 of the first reversing bracket 37 slides up along the guide surface 57, thereby transitioning its orientation from the inverted state 37a to the stand-up state 37b, thereby reversing the orientation of the syringe container 21 in the inverted state 22a to the stand-up state 22b. Therefore, this relatively simple structure makes it possible to perform the conveyance and orientation reversing of the syringe containers 21 quickly and accurately.

Furthermore, in the container orientation reversing device 11 according to the embodiment of the present invention, the reversing action member 39 is structured such that the vertical wall 56 is provided to the outer circumferential edge 40b of the elliptical flat plate 40, and the center 40a of the flat plate 40 is eccentric with respect to the main shaft 31 of the wheel member 33. Therefore, employing the relatively simple structure, the reversing action member 39 enables the first reversing brackets 37 to perform the smooth orientation reversing operations in transitioning between the inverted state 37a and the stand-up state 37b. As a result, the container conveyance and orientation reversing by the container orientation reversing device 11 can be performed quickly and accurately.

### [Schematic Structure of Second Reversing bracket 61 and Second Stay 71 According to Second Embodiment]

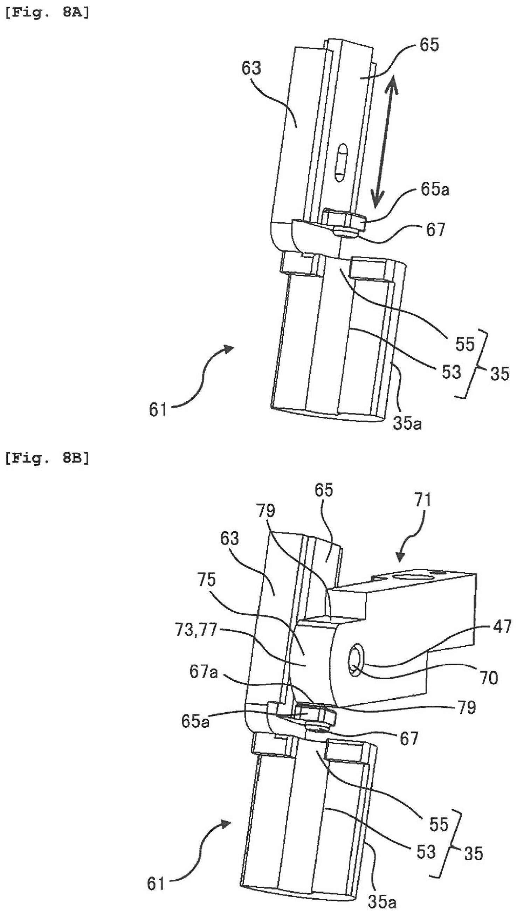

Next, a schematic structure of a second reversing bracket 61 and a second stay 71 according to a second embodiment will be described with reference to Figs. 8A and 8B as needed.

Fig. 8A is a perspective view showing the schematic structure of the second reversing bracket 61 provided in the container orientation reversing device 11. Fig. 8B is a perspective view showing the schematic structure of the second reversing bracket 61 pivotally supported by the second stay 71 provided in the container orientation reversing device 11.

The first reversing bracket 37 and the first stay 41 according to the first embodiment and the second reversing bracket 61 and the second stay 71 according to the second embodiment have the common basic structure. Therefore, the following description will focus on a difference between the two, instead of entirely describing the second reversing bracket 61 and the second stay 71 according to the second embodiment.

The difference between the two is that the first reversing bracket 37 employs the structure including the first cantilever arm 51 pivotally supported by the first tip end 45 of the first stay 41 via the first pin 49 and the holder 35 for holding the syringe container 21, whereas the second reversing bracket 61 employs a structure including a second cantilever arm 63 pivotally supported by a second tip end 73 of the second stay 71 via a second pin 70 (corresponding to a "secondary shaft" of the present invention).

However, the second reversing bracket 61 is the same as the first reversing bracket 37 in that it has the holder 35 for holding the syringe container 21, and the holder 35 has the semi-cylindrical accommodating groove 53 for accommodating the syringe container 21, and the recess-shaped engaging portion 55 with which the flange portion 23 of the syringe container 21 is to be engaged.

In particular, as shown in Figs. 8A and 8B, the second reversing bracket 61 further includes a movable stopper 65 which is provided with its one end 65a facing a bottom portion 21a of the syringe container 21, and which is movable along a longitudinal direction of the syringe container 21 (see an arrow in Fig. 8A), and a cam mechanism 75 configured to move the one end 65a of the movable stopper 65 toward the bottom portion 21a of the syringe container 21. The bottom portion 21a of the syringe container 21 is provided with a circular recess 24, whereas the one end 65a of the movable stopper 65 is provided with a protrusion 67 configured to fit into the recess 24.

The movable stopper 65 is provided so as to be movable relative to the second cantilever arm 63 along the longitudinal direction of the syringe container 21. An arc-shaped cam surface 77 constituting the cam mechanism 75 is formed on an outer side of a second tip end 73 of the second stay 71 in the radial direction of the main shaft 31. Here, under normal circumstances, the movable stopper 65 is pulled by a biasing force in a direction away from the engaging portion 55 provided in the holder 35 of the second reversing bracket 61 applied by an action of a biasing member such as a built-in spring.

That is, the second reversing bracket 61 is pivotally supported via the second pin (secondary shaft) 70 of the second stay 71 provided on the outer circumferential edge 33a of the wheel member 33 so that its orientation in the radial direction of the main shaft 31 can be pivoted between the inverted state and the stand-up state. At the second tip end 73 of the second stay 71, which is located on the outer side in the radial direction, the arc-shaped cam surface 77 centered on the second pin (secondary shaft) 70 and cutout portions 79 of the cam surface 77 are formed.

More specifically, a pair of cutout portions 79 are provided on upper and lower sides of the cam surface 77 provided at the second tip end 73 of the second stay 71. The pair of cutout portions 79 are provided at the second tip end 73 of the second stay 71 so as to smaller than the radius of the arc-shaped cam surface 77 formed around the second pin 70.

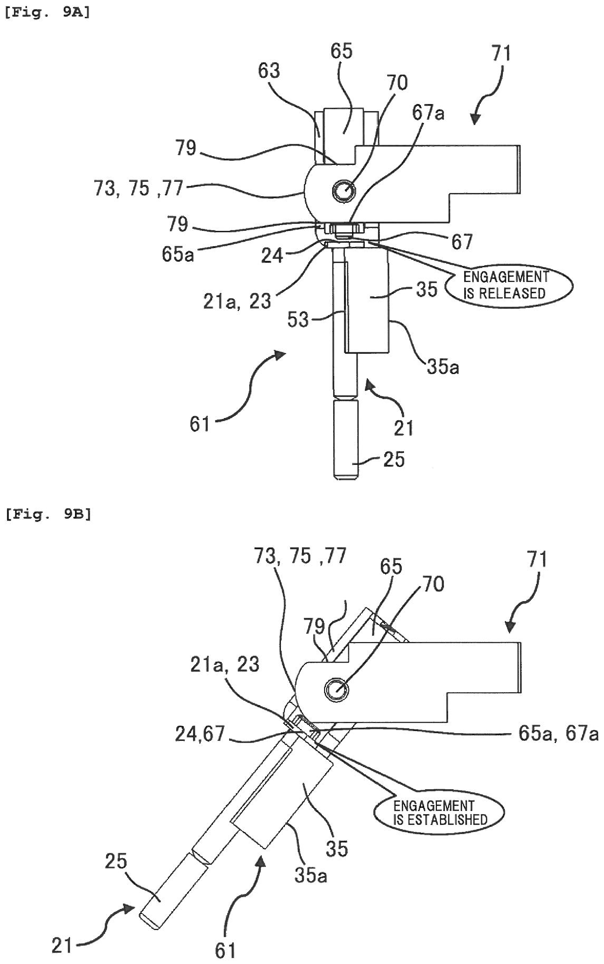

However, in the example shown in Figs. 8B and 9A to 9D, among the pair of cutout portions 79, the cutout portion 79 provided on the lower side of the cam surface 77 of the second tip end 73 of the second stay 71 is set by adjusting the upper-lower dimension of the second tip end 73 itself to a dimension smaller than the radius of the arc-shaped cam surface 77 formed around the second pin 70.

As a result, when the second reversing bracket 61 is oriented in the axial direction of the main shaft 31 (the second reversing bracket 61 is in the inverted state or the stand-up state), the movable stopper 65 withdraws and retracts in accordance with the biasing force. Then, the engagement state between the recess 24 provided in the bottom portion 21a of the syringe container 21 and the protrusion 67 of the movable stopper 65 is released.

The cam mechanism 75 is constituted by a combination of the cam surface 77 formed at the second tip end 73 of the second stay 71, the cutout portions 79 of the cam surface 77, and the protrusion 67 provided at the one end 65a of the movable stopper 65.

That is, in the course of transitioning the second reversing bracket 61 from the inverted state to the stand-up state, the combination of the second reversing bracket 61 and the second stay 71 according to the second embodiment operates so that the engagement state between the recess 24 provided in the bottom portion 21a of the syringe container 21 and the protrusion 67 of the movable stopper 65 is established when a back surface 67a of the protrusion 67 of the movable stopper 65 faces the cam surface 77, whereas the engagement state between the recess 24 provided in the bottom portion 21a of the syringe container 21 and the protrusion 67 of the movable stopper 65 is released when the back surface 67a of the protrusion 67 of the movable stopper 65 faces any of the cutout portions 79 of the cam surface 77.

Next, operations of the container orientation reversing device 11 employing the combination of the second reversing bracket 61 and the second stay 71 according to the second embodiment will be described with reference to Figs. 9A to 9D as needed.

Figs. 9A to 9D are side views of the second reversing bracket 61 pivotably supported by the second stay 71 provided in the container orientation reversing device 11.

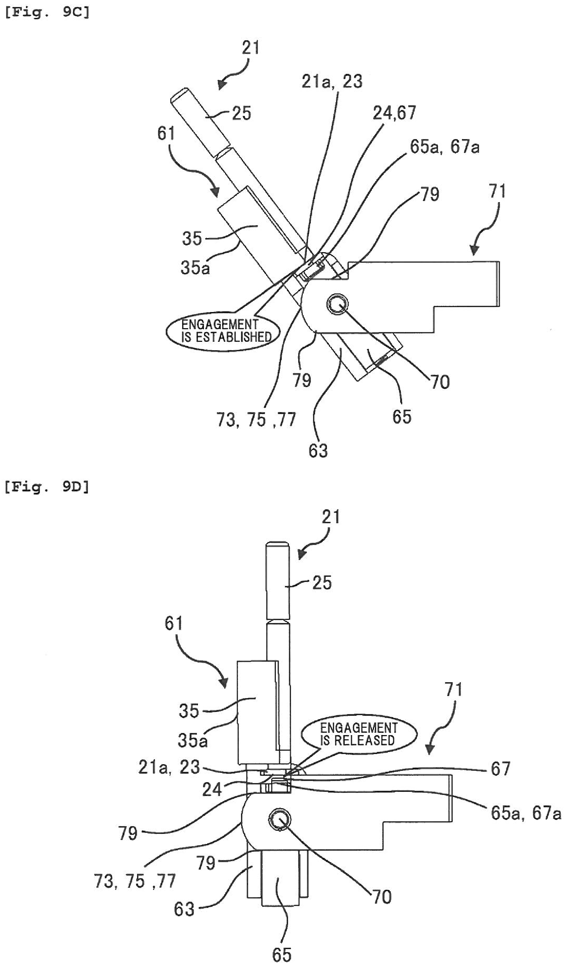

In a case where the second reversing bracket 61 is in the inverted state (see Fig. 9A) or the stand-up state (see Fig. 9D), the protrusion 67 of the movable stopper 65 faces the corresponding one of the cutout portions 79 of the cam surface 77 formed at the second tip end 73 of the second stay 71, but does not face the cam surface 77 itself. Therefore, the movable stopper 65 withdraws and retracts in accordance with the biasing force. Thus, the engagement state between the recess 24 provided in the bottom portion 21a of the syringe container 21 and the protrusion 67 of the movable stopper 65 is released. At this time, the container orientation reversing device 11 allows the syringe container 21 to be transferred from the container supplying device 13 or to the container receiving device 15.

In a case where the second reversing bracket 61 is transitioning from the inverted state to the stand-up state (see Figs. 9B and 9C), the protrusion 67 of the movable stopper 65 faces the cam surface 77 formed at the second tip end 73 of the second stay 71. Therefore, the movable stopper 65 protrudes and ejects against the biasing force. Then, the engagement state is established between the recess 24 provided in the bottom portion 21a of the syringe container 21 and the protrusion 67 of the movable stopper 65.

As a result, in the container orientation reversing device 11, in the case where the second reversing bracket 61 is transitioning from the inverted state to the stand-up state, the holding strength for the syringe container 21 by the holder 35 of the second reversing bracket 61 can be further increased.

The container orientation reversing device 11 employing the combination of the second reversing bracket 61 and the second stay 71 according to the second embodiment can achieve, with a relatively simple structure, even higher strength with which the holder 35 of the second reversing bracket 61 holds the syringe container 21 while the second reversing bracket 61 is transitioning from the inverted state to the stand-up state, than the container orientation reversing device 11 employing the combination of the first reversing bracket 37 and the first stay 41 according to the first embodiment.

As a result, even if an external disturbance such as vibration occurs in the container orientation reversing device 11 during the container conveying and orientation reversing operations, it is expected that the syringe containers 21 will be prevented from falling off from the holders 35 of the second reversing brackets 61.

### [Other Embodiments]

The above-described embodiments merely present the examples of how to embody the present invention. Therefore, the technical scope of the present invention should not be interpreted as being limited by these embodiments. The present invention may be carried out in various modes without departing from the spirit or main features of the present invention.

It is also possible to replace part of the structure of each of the embodiments described herein with the structure of another embodiment, and it is also possible to add the structure of one embodiment to the structure of another embodiment. It is also possible to add, delete, or replace part of the structure of each embodiment with another structure.

For example, in the description of the container orientation reversing device 11 according to the embodiment of the present invention, the example is described in which the present invention is applied to the syringe containers 21 as containers, but the present invention is not limited to this example. Needless to say that the present invention can be also applied to containers other than syringe containers.

### Reference Signs List

11 Container orientation reversing device
21 Syringe container (Container)
21a Bottom portion (Bottom portion of a syringe container)
22a Inverted state (Inverted state of the syringe container)
22b Stand-up state (Stand-up state of the syringe container)
23 Flange portion
24 Recess (Recess provided in the bottom portion of the syringe container)
31 Main shaft (Main shaft of a wheel member)
33 Wheel member
33a Outer circumferential edge (Outer circumferential edge of the wheel member)
35 Holder (Holder for holding the syringe container)
35a Back surface (Back surface of the holder)
37 First reversing bracket (Reversing bracket)
37a Inverted state (Inverted state of the first reversing bracket)
37b Stand-up state (Stand-up state of the first reversing bracket)
39 Reversing action member
40 Flat plate
40a Center of the flat plate
40b Outer circumferential edge (Outer circumferential edge of the flat plate)
41 First stay (Stay)
49 First pin
51 First cantilever arm
53 Accommodating groove (Accommodating groove of the holder)
55 Engaging portion (Engaging portion of the holder)
56 Vertical wall
57 Guide surface
61 Second reversing bracket (Reversing bracket)
63 Second cantilever arm
65 Movable stopper
65a One end (One end of the movable stopper)
67 Protrusion (Protrusion provided at the one end of the movable stopper)
71 Second stay (Stay)
73 Second tip end portion
75 Cam mechanism
77 Cam surface
79 Cutout portion (Cutout portion of the cam surface)

## Claims

1. A container orientation reversing device configured to reverse an orientation of a cylindrical syringe container having a flange portion at its one end from an inverted state to a stand-up state during conveyance of the syringe container, comprising:
a disk-shaped wheel member provided configured to rotate around a main shaft extending in a vertical direction;
a plurality of reversing brackets provided on an outer circumferential edge of the wheel member, the reversing brackets each including a holder configured to hold the syringe container; and
a reversing action member configured to cause an orientation reversing operation of reversing the orientation of the syringe container, which is held in the inverted state by the holder of each of the reversing brackets, to the stand-up state, wherein
the reversing brackets are each supported by the outer circumferential edge so as to pivotably turn the orientation of the syringe container from the inverted state to the stand-up state in a radial direction of the main shaft,
the holder of each of the reversing brackets includes a semi-cylindrical accommodating groove configured to accommodate the syringe container, and an engaging portion configured to engage with the flange portion of the syringe container,
the accommodating groove provided in the holder of the reversing bracket faces on an outer side in the radial direction of the main shaft when the reversing bracket is in an inverted state, and faces on an inner side in the radial direction of the main shaft when the reversing bracket is in a stand-up state,
the reversing action member has a vertical wall following an arc-shaped trajectory when viewed along an axial direction of the main shaft, the vertical wall disposed outside the outer circumferential edge of the wheel member, a top edge of the vertical wall provided with a guide surface undulating in a mountain shape when viewed from the main shaft side,
a back surface of the holder of the reversing bracket slides up along the guide surface according to rotation of the wheel member, thereby transitioning the orientation of the reversing bracket from the inverted state to the stand-up state, thereby reversing the orientation of the syringe container from the inverted state to the stand-up state,
the reversing action member is provided with the vertical wall at an outer circumferential edge of an elliptical flat plate, and
a center of the flat plate is eccentric with respect to the main shaft of the wheel member.

2. A container orientation reversing device configured to reverse an orientation of a cylindrical syringe container having a flange portion at its one end from an inverted state to a stand-up state during conveyance of the syringe container, comprising:
a disk-shaped wheel member configured to rotate around a main shaft extending in a vertical direction;
a plurality of reversing brackets provided on an outer circumferential edge of the wheel member, the reversing brackets each including a holder configured to hold the syringe container; and
a reversing action member configured to cause an orientation reversing operation of reversing the orientation of the syringe container, which is held in the inverted state by the holder of each of the reversing brackets, to the stand-up state, wherein
the reversing brackets are each supported by the outer circumferential edge so as to pivotally turn the orientation of the syringe container from the inverted state to the stand-up state in a radial direction of the main shaft,
the holder of each of the reversing brackets includes a semi-cylindrical accommodating groove configured to accommodate the syringe container, and an engaging portion configured to engage with the flange portion of the syringe container,
the accommodating groove provided in the holder of the reversing bracket faces on an outer side in the radial direction of the main shaft when the reversing bracket is in an inverted state, and faces on an inner side in the radial direction of the main shaft when the reversing bracket is in a stand-up state,
the reversing action member has a vertical wall following an arc-shaped trajectory when viewed along an axial direction of the main shaft, the vertical wall disposed outside the outer circumferential edge of the wheel member, a top edge of the vertical wall provided with a guide surface undulating in a mountain shape when viewed from the main shaft side,
a back surface of the holder of the reversing bracket slides up along the guide surface according to rotation of the wheelmember, thereby transitioning the orientation of the reversing bracket from the inverted state to the stand-up state, thereby reversing the orientation of the syringe container from the inverted state to the stand-up state,
each of the reversing brackets further includes a movable stopper provided so that one end of the movable stopper faces a bottom portion of the syringe container and configured to be movable along a longitudinal direction of the syringe container, and a cam mechanism configured to move the one end of the movable stopper toward the bottom portion of the syringe container, and
the bottom portion of the syringe container is provided with a circular recess, whereas the one end of the movable stopper is provided with a protrusion configured to engage with the recess.

3. The container orientation reversing device according to claim 1, wherein
each of the reversing brackets further includes a movable stopper provided so that one end of the movable stopper faces a bottom portion of the syringe container and configured to be movable along a longitudinal direction of the syringe container, and a cam mechanism configured to move the one end of the movable stopper toward the bottom portion of the syringe container, and
the bottom portion of the syringe container is provided with a circular recess, whereas the one end of the movable stopper is provided with a protrusion configured to engage with the recess.

4. The container orientation reversing device according to claim 2, wherein
each of the reversing brackets is pivotally supported via a secondary shaft of a stay provided on the outer circumferential edge of the wheel member so as to pivotably turn the orientation of the reversing bracket in the radial direction of the main shaft between the inverted state and the stand-up state,
an arc-shaped cam surface centered on the secondary shaft and a cutout portion of the cam surface are formed at a tip end of the stay located on an outer side in the radial direction,
the cam mechanism includes a combination of the cam surface formed at the tip end of the stay, the cutout portion of the cam surface, and a protrusion provided at the one end of the movable stopper, and
in the course of transitioning the reversing bracket from the inverted state to the stand-up state,
an engagement state between the recess provided in the bottom portion of the syringe container and the protrusion of the movable stopper is established when a back surface of the protrusion of the movable stopper faces the cam surface, and
the engagement state between the recess provided in the bottom portion of the syringe container and the protrusion of the movable stopper is released when the back surface of the protrusion of the movable stopper faces the cutout portion of the cam surface.
